# FASCICULE DE BREVET EUROPEEN

(11) **EP 4 180 681 B1**
(45) Date de publication et mention de la délivrance du brevet: **09.04.2025**
(21) Numéro de dépôt: 22205994.1
(22) Date de dépôt: 08.11.2022
(51) Int. Cl.: F16D 13/74

(54) **EMBRAYAGE HUMIDE AMÉLIORÉ POUR SYSTÈME DE GROUPE MOTOPROPULSEUR**
VERBESSERTE NASSKUPPLUNG FÜR EIN MOTORISIERTES ANTRIEBSSYSTEM
IMPROVED WET CLUTCH FOR A MOTORIC GROUP.

(30) Priorité: 16.11.2021 FR 2112088
(43) Date de publication de la demande: 17.05.2023
(73) Titulaire: VALEO EMBRAYAGES, 80009 Amiens (FR)
(72) Inventeur: VUAROQUEAUX, Guillaume, 80000 Amiens (FR); THIBAUT, Francois, 80000 Amiens (FR); LEVILLAIN, Anthony, 80000 Amiens (FR)
(74) Mandataire: Valeo Powertrain Systems

(56) Documents cités:
- EP-A1- 4 019 794
- WO-A1-2021/059510
- DE-A1- 102019 104 074
- DE-A1- 102020 102 359
- FR-A1- 3 110 879

## Description

[La présente invention concerne un embrayage humide amélioré pour système de groupe motopropulseur. L'invention concerne également un double embrayage humide et un triple embrayage humide comprenant cet embrayage humide amélioré.

La présente invention se rapporte au domaine des systèmes de groupe motopropulseur pour véhicules, de type véhicules automobiles ou véhicules industriels, notamment disposés entre un moteur thermique et une boîte de vitesses.

L'invention concerne par exemple un triple embrayage humide pour un véhicule automobile de type hybride dans lequel une machine électrique tournante est disposée dans le système de groupe motopropulseur.

Dans l'état de la technique, il est connu des véhicules automobiles de type hybride comprenant un double embrayage humide disposé entre un moteur à combustion interne et une boîte de vitesses, une machine électrique tournante ainsi qu'un embrayage de coupure de couple autrement appelé « embrayage K0 ». Un organe d'actionnement de cet embrayage de coupure de couple permet d'accoupler ou désaccoupler en rotation un vilebrequin du moteur à combustion interne à un rotor de la machine électrique tournante. Ainsi, il est possible de couper le moteur à combustion interne à chaque arrêt du véhicule et de le redémarrer grâce à la machine électrique tournante. La machine électrique tournante peut également constituer un frein électrique ou apporter un surplus d'énergie au moteur à combustion interne pour l'assister ou éviter que celui-ci ne cale. Lorsque le moteur à combustion interne est en fonctionnement, la machine électrique peut jouer le rôle d'un alternateur. La machine électrique tournante peut également assurer l'entraînement du véhicule indépendamment du moteur à combustion interne.

Une solution technique permettant de réduire l'encombrement radial consiste à décaler la machine électrique tournante par rapport à l'axe principal de la transmission, c'est-à-dire que l'axe de rotation du rotor de la machine électrique tournante est parallèle à l'axe de rotation des embrayages comme décrit dans le document WO2020/099136 A1. Dans cette architecture, le rotor de la machine électrique tournante est relié cinématiquement avec un porte-disques de transmission de couple du triple embrayage par l'intermédiaire d'une couronne d'entrainement dentée. Le guidage en rotation de ce porte-disques est primordial pour limiter la bruyance au niveau de la couronne d'entrainement dentée. Notamment, le porte-disques de transmission de couple est guidé en rotation directement par rapport au carter de la machine électrique tournante par l'intermédiaire d'un palier de guidage radial, dans cet exemple un palier à aiguilles.

Dans cette architecture dites « off-line », la position axiale de la couronne d'entrainement dentée doit être proche du palier de guidage radial dont la fonction est de supporter les charges radiales au sein du triple embrayage humide. Il est alors contraignant de bien positionner ce palier de guidage radial par rapport à la couronne d'entrainement dentée afin de limiter les mouvements de nutation du triple embrayage humide. Egalement, il est important de veiller à la lubrification de ce palier de guidage radial pour garantir la fiabilité du triple embrayage humide pendant toute la durée de vie du système de groupe motopropulseur.

L'invention vise à améliorer la conception présentée dans la demande de brevet WO2020/099136 A1 en garantissant un guidage stable de la couronne d'entrainement dentée du triple embrayage humide et en assurant une bonne lubrification du palier de guidage radial supportant cette couronne dentée d'entrainement. Les documents DE102020102359 A1 et DE102019104074 A1 montrent aussi l'état de la technique.

L'invention a notamment pour but d'apporter une solution simple, efficace et économique à ce problème.

Le but de la présente invention est notamment de proposer un embrayage humide permettant de résoudre au moins en partie les inconvénients mentionnés de l'art antérieur.

Dans ce but, l'invention propose, selon l'un de ses aspects, un embrayage humide pour système de groupe motopropulseur comportant autour d'un axe X au moins :
- un ensemble multidisques composé de flasques et de disques de friction ;
- un porte-disques de transmission de couple supportant l'ensemble multidisques de l'embrayage humide, comportant :
   - une portion cylindrique,
   - un flasque s'étendant radialement depuis la portion cylindrique,
   - une cavité annulaire d'axe X disposée sur un côté du flasque et agencée pour recevoir un piston d'actionnement de l'ensemble multidisques,
- un palier de guidage radial rapporté sur le porte-disques de transmission de couple de l'autre côté du flasque et agencé pour guider en rotation l'embrayage humide par rapport au système de groupe motopropulseur,
dans lequel le porte-disques de transmission de couple comprend au moins une portion de sortie d'un canal de lubrification du palier de guidage radial qui débouche radialement en dessous du palier de guidage radial, la portion de sortie du canal de lubrification est orientée dans la direction opposée à celle de la cavité annulaire et inclinée par rapport à l'axe X d'un angle compris entre 0 et 60 degrés.

Cet embrayage humide, selon l'invention, présente l'avantage, de lubrifier le palier de guidage radial de l'embrayage humide avec un débit d'huile adapté. La durée de vie du palier de guidage radial est améliorée.

Au sens de la présente demande, un embrayage humide est un embrayage qui est adapté pour fonctionner dans un bain d'huile.

Le palier de guidage radial peut être un palier à aiguilles.

Selon une variante de l'invention, le palier de guidage radial peut être un roulement à billes.

Selon une autre variante de l'invention, le palier de guidage radial peut être un roulement à rouleaux.

De préférence, le porte-disques de transmission de couple peut comprendre plusieurs portions de sortie de canaux de lubrification réparties autour de l'axe de rotation X.

Avantageusement, le porte-disques de transmission de couple peut comprendre une collerette cylindrique à l'intérieur de laquelle est insérée le palier de guidage radial, la collerette cylindrique s'étendant axialement dans la direction opposée à celle de la cavité annulaire.

De préférence, l'embrayage humide peut comprendre un palier de guidage axial disposé radialement en dessous du palier de guidage radial, ladite portion de sortie débouche radialement en dessous du palier de guidage axial.

Avantageusement, le palier de guidage axial peut être en appui sur le porte-disques de transmission de couple dans un logement de réception, le logement de réception étant orienté axialement dans la direction opposée à celle de la cavité annulaire.

Avantageusement, le logement de réception du palier de guidage axial peut être formé par la collerette cylindrique, le flasque et la portion cylindrique du porte-disques de transmission de couple.

De préférence, un couvercle d'entrainement peut être rapporté sur la périphérie extérieure du flasque du porte-disques de transmission de couple et comprendre une couronne dentée apte à être liée en rotation avec une machine électrique tournante autour d'un axe parallèle à l'axe de rotation X.

Avantageusement, la collerette cylindrique supportant le palier de guidage radial peut être disposée géométriquement au droit du couvercle d'entrainement. De cette manière, on limite les mouvements de nutation du triple embrayage humide au niveau de la liaison avec la machine électrique tournante en disposant le palier de guidage radial à proximité du couvercle d'entrainement.

De préférence, le canal de lubrification peut être alimenté en fluide de lubrification par l'intermédiaire de conduites usinées directement dans le deuxième arbre mené de la boite de vitesses du système de groupe motopropulseur, les conduites usinées guidant le flux d'alimentation d'huile de lubrification en direction du porte-disques de transmission de couple. Par exemple, le flux d'huile de lubrification peut passer entre l'alésage central du porte-disques de transmission de couple et la surface externe du deuxième arbre mené.

Selon une première variante de l'invention, le canal de lubrification peut déboucher radialement dans un alésage central d'axe X du porte-disques de transmission de couple. L'entrée du canal de lubrification communiquant directement avec l'alésage central du porte-disques de transmission de couple peut comprendre un lamage usiné dont le diamètre est supérieur au diamètre de la portion de sortie.

Avantageusement, le canal de lubrification peut déboucher radialement dans une zone de réserve présentant un diamètre élargi par rapport à l'alésage central d'axe X du porte-disques de transmission de couple, l'entrée du canal de lubrification étant décalée axialement par rapport aux bords de la zone de réserve d'une valeur Y comprise entre 1 et 10 mm. La zone de réserve crée un réservoir d'huile de lubrification du palier de guidage radial améliorant le débit dans la portion de sortie.

Cet embrayage humide selon la première variante de l'invention présente l'avantage de réduire le chemin parcouru par l'huile de lubrification avant d'atteindre le palier de guidage radial. Le rendement de la lubrification est amélioré.

Selon une deuxième variante de l'invention, le canal de lubrification peut déboucher radialement dans un alésage central d'axe X du porte-disques de transmission de couple. Le canal de lubrification peut déboucher radialement dans une zone de réserve présentant un diamètre élargi par rapport à l'alésage central d'axe X du porte-disques de transmission de couple, l'entrée du canal de lubrification étant décalée axialement par rapport aux bords de la zone de réserve d'une valeur Y comprise entre 1 et 10 mm. L'entrée du canal de lubrification communiquant directement avec l'alésage central est du même diamètre que la portion de sortie. La zone de réserve crée un réservoir d'huile de lubrification du palier de guidage radial améliorant le débit dans la portion de sortie

Selon une troisième variante de l'invention, la portion de sortie du canal de lubrification peut être orientée selon un axe perpendiculaire à l'axe X et traverser de part en part la portion cylindrique.

Cet embrayage humide selon la troisième variante de l'invention présente l'avantage de réduire le chemin parcouru par l'huile de lubrification avant d'atteindre le palier de guidage radial et de lubrifier le palier de guidage radial de l'embrayage humide avec un débit d'huile adapté. La durée de vie du palier de guidage radial est améliorée.

Selon une quatrième variante de l'invention, l'embrayage humide peut comprendre un piston d'actionnement de l'ensemble multidisques, mobile axialement par rapport au porte-disques de transmission de couple entre une position embrayée et une position débrayée de l'embrayage humide, le piston d'actionnement étant commandé en déplacement au moyen d'une chambre de commande, délimitée en partie par le piston d'actionnement et la cavité annulaire, à laquelle est associée une chambre d'équilibrage délimitée en partie par le piston d'actionnement, ledit canal de lubrification communiquant avec la chambre d'équilibrage.

De manière optionnelle, le canal de lubrification peut communiquer avec un alésage central d'axe X du porte-disques de transmission de couple.

Cet embrayage humide selon la quatrième variante de l'invention présente l'avantage de réduire le nombre d'usinage nécessaire à la réalisation du canal de lubrification.

Selon une cinquième variante de l'invention, l'embrayage humide peut comprendre un piston d'actionnement de l'ensemble multidisques, mobile axialement par rapport au porte-disques de transmission de couple entre une position embrayée et une position débrayée de l'embrayage humide, le piston d'actionnement étant commandé en déplacement au moyen d'une chambre de commande, délimitée en partie par le piston d'actionnement et la cavité annulaire, à laquelle est associée une chambre d'équilibrage délimitée en partie par le piston d'actionnement, ledit canal de lubrification communiquant avec la chambre d'équilibrage. Le canal de lubrification peut être commun avec un canal de refroidissement alimentant en huile la chambre d'équilibrage et comprend une bifurcation formant la portion de sortie.

Avantageusement, le canal de refroidissement peut comprendre un orifice d'entrée d'huile dont l'implantation est disposée radialement à l'intérieur de la portion de sortie et un orifice de sortie d'huile débouchant dans la chambre d'équilibrage, le canal de refroidissement traversant de part en part le porte-disques de transmission de couple.

De préférence, la portion de sortie peut être disposée axialement entre l'orifice d'entrée d'huile et l'orifice de sortie d'huile du canal de refroidissement.

Cet embrayage humide selon la cinquième variante de l'invention présente l'avantage de fournir un débit conséquent d'huile de lubrification en direction du palier de guidage radial.

L'invention a également pour objet, selon un autre de ses aspects, un double embrayage humide pour système de groupe motopropulseur comportant autour d'un axe X au moins :
- un premier embrayage humide reprenant tout ou partie des caractéristiques mentionnées précédemment, de type multidisques, commandé pour accoupler sélectivement un arbre menant à un premier arbre mené ;
- un deuxième embrayage humide, de type multidisques, commandés pour accoupler sélectivement un arbre menant à un deuxième arbre mené ;
les premier et deuxième embrayages étant disposés radialement l'un au-dessus de l'autre.

De préférence, le porte-disques de transmission de couple du premier embrayage peut être commun avec le deuxième embrayage et supporter l'ensemble multidisques du deuxième embrayage humide.

Avantageusement, le porte-disques de transmission de couple peut supporter les ensembles multidisques du premier embrayage et du deuxième embrayage, et comporter une deuxième cavité annulaire agencée pour recevoir un piston d'actionnement du deuxième embrayage,
et dans lequel la portion de sortie de canal de lubrification traverse le flasque et débouche radialement en dessous du palier de guidage radial dans la direction opposée à celle des cavités. Cette disposition est particulièrement adaptée au double embrayage humide pour lequel une architecture radiale compacte est recherchée.

De préférence, la première cavité annulaire peut être disposée radialement au-delà de la deuxième cavité annulaire. Ce double embrayage humide selon l'invention présente l'avantage, grâce à l'imbrication radiale des chambres de commande des pistons d'actionnement de réduire son encombrement général.

Avantageusement, les canaux de lubrification sont disposés angulairement entre les canaux d'huile débouchant dans les premières et deuxième cavités annulaires.

De préférence, le porte-disques de transmission de couple peut supporter un palier de guidage radial et / ou axial agencé pour guider en rotation le double embrayage humide par rapport au système de groupe motopropulseur, le flasque du porte-disques de transmission de couple comprenant au moins une portion de sortie d'un canal de lubrification orientée dans la direction opposée à celle des cavités, ladite portion de sortie débouche radialement en dessous du palier de guidage radial et / ou axial.

L'invention a également pour objet, selon un autre de ses aspects, un triple embrayage humide pour système de groupe motopropulseur comprenant un embrayage de coupure de couple de type multidisques, commandé pour accoupler sélectivement un arbre menant à une machine électrique tournante, et un double embrayage humide reprenant tout ou partie des caractéristiques mentionnées précédemment, l'embrayage de coupure de couple étant disposé radialement au-dessus du double embrayage humide.

Avantageusement, le triple embrayage humide peut comporter le porte-disques de transmission de couple du double embrayage humide qui est également commun à l'embrayage de coupure de couple, ledit porte-disques de transmission de couple comprenant une cavité annulaire disposée radialement au-delà du double embrayage humide et agencée pour recevoir un piston d'actionnement de l'embrayage de coupure de couple, ledit porte-disques de transmission de couple comprenant un couvercle d'entrainement rapporté et agencé pour être entrainé en rotation par une machine électrique tournante, le couvercle d'entrainement formant en partie la cavité annulaire de l'embrayage de coupure de couple.

Avantageusement, le couvercle d'entrainement peut entourer le pourtour extérieur du flasque.

Grace à cette architecture de triple embrayage humide, les embrayages sont concentriques et disposés radialement dans un même plan. L'encombrement axial d'un tel triple embrayage humide au sein d'un système de groupe motopropulseur est ainsi réduit.

Le positionnement du couvercle d'entrainement sur le pourtour extérieur du porte-disques de transmission de couple limite les mouvements de nutation du triple embrayage humide. Le porte à faux du couvercle d'entrainement par rapport au palier de guidage radial est réduit. Les jeux de dentures au niveau de la liaison cinématique avec le rotor de la machine électrique tournante sont réduit. Cela a pour effet de réduire le niveau de bruyance au sein de la transmission.

Selon un mode de réalisation, le couvercle d'entrainement peut comprendre une zone de connexion apte à être lié en rotation avec une machine électrique tournante autour d'un axe parallèle à l'axe de rotation X. La zone de connexion peut être décalée axialement de l'embrayage de coupure et/ou des premier et deuxième embrayages. La machine électrique tournante est alors dite « off-line ».

De préférence, le couvercle d'entrainement peut comprendre une cannelure agencée pour recevoir l'ensemble multidisques de l'embrayage de coupure de couple, ladite cannelure étant issue de matière avec le couvercle d'entrainement ou rapportée sur le couvercle d'entrainement.

Avantageusement, le couvercle d'entrainement peut comprendre une couronne dentée apte à être liée en rotation avec une machine électrique tournante autour d'un axe parallèle à l'axe de rotation X.

Cette disposition permet de positionner la machine électrique tournante en fonction de l'espace disponible dans la chaine de transmission de couple du véhicule. Cette disposition permet notamment de ne pas avoir à disposer la machine électrique axialement à la suite des embrayages, ce qui serait négatif pour la compacité axiale. Cette disposition permet notamment de ne pas avoir à disposer la machine électrique tournante radialement au-delà des embrayages, ce qui serait négatif pour la compacité radiale.

De manière alternative, une chaine ou une courroie peut être utilisée pour relier la machine électrique tournante à la zone de connexion.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées.
- la [Figure 1] représente une vue en coupe axiale d'un triple embrayage humide selon un premier mode de réalisation de l'invention.
- la [Figure 2] représente une vue de détail en coupe axiale de l'embrayage humide selon le premier mode de réalisation de l'invention de la [Figure 1].
- la [Figure 3] représente une vue de détail en coupe axiale d'un embrayage humide selon un deuxième mode de réalisation de l'invention.
- la [Figure 4] représente une vue de détail en coupe axiale d'un embrayage humide selon un troisième mode de réalisation de l'invention.
- la [Figure 5] représente une vue de détail en coupe axiale d'un triple embrayage humide selon un quatrième mode de réalisation de l'invention.
- la [Figure 6] représente une vue de détail en coupe axiale d'un triple embrayage humide selon un cinquième mode de réalisation de l'invention.

Dans la suite de la description et des revendications, on utilisera à titre non limitatif et afin d'en faciliter la compréhension, les termes " avant " ou " arrière " selon la direction par rapport à une orientation axiale déterminée par l'axe X principal de rotation de la transmission du véhicule automobile et les termes " intérieur / interne " ou " extérieur / externe " par rapport à l'axe X et suivant une orientation radiale, orthogonale à ladite orientation axiale.

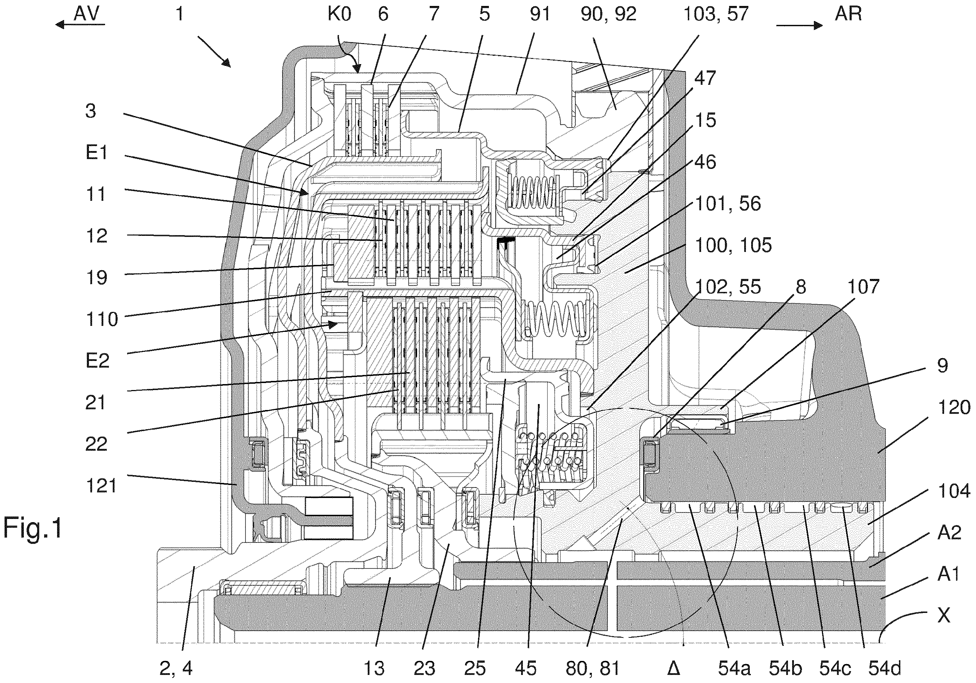

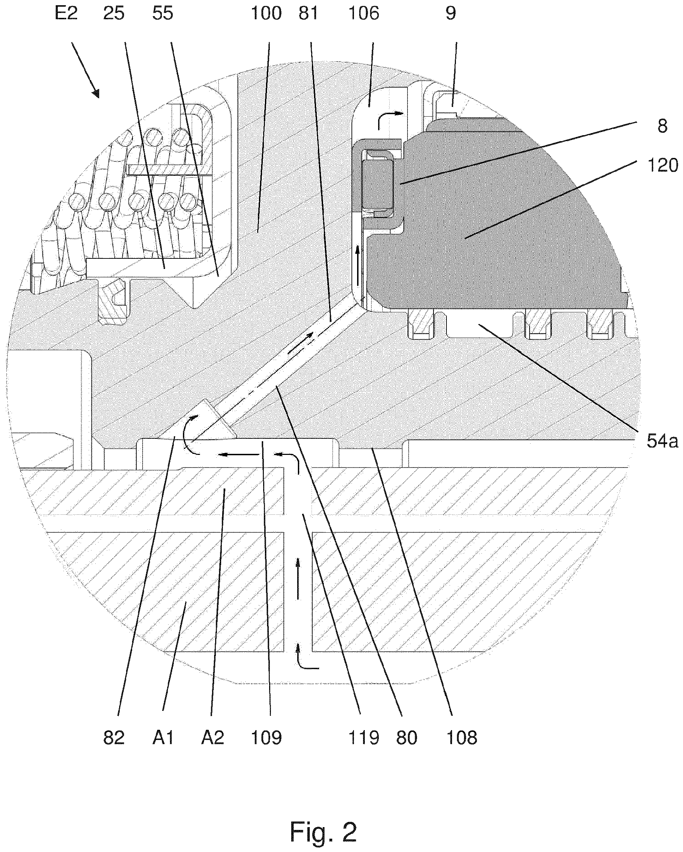

On a représenté sur les figures 1 et 2 un premier mode de réalisation d'un embrayage humide E1 selon l'invention intégré au sein d'un triple embrayage humide 1. Le triple embrayage humide 1 est représenté au sein d'un système de groupe motopropulseur de véhicule automobile par l'intermédiaire d'un carter de boite de vitesses 120 équipé de deux arbres A1, A2 menés de sortie de couple.

Sur la figure 1, on observe un triple embrayage humide 1 comprenant :
- un embrayage de coupure de couple K0 de type multidisques, commandé pour accoupler sélectivement un arbre menant à une machine électrique tournante,
- un premier embrayage humide E1 de sortie de couple et un deuxième embrayage humide E2 de sortie de couple respectivement de type multidisques, commandés pour accoupler sélectivement la machine électrique et/ou l'arbre menant à un premier arbre mené et à un deuxième arbre mené, les premier et deuxième embrayages humides E1, E2 étant disposés radialement l'un au-dessus de l'autre, et
- un porte-disques de transmission de couple 100 ayant pour fonction d'introduire le couple au sein des embrayages et pour autre fonction d'alimenter en huile les chambres de commande et les chambres d'équilibrage de l'embrayage de coupure de couple K0, du premier embrayage humide E1 et du deuxième embrayage humide E2.

Le premier embrayage humide E1 est de type multidisques et fonctionne dans un environnement humide. Le premier embrayage humide E1 comprend notamment un ensemble multidisques, composé de flasques 11 et de disques 12 de friction, et le porte-disques de transmission de couple 100 agencé pour recevoir l'ensemble multidisques par l'intermédiaire d'un support de disques 110 rapporté. Le support de disques 110 est assemblé fixement au porte-disques de transmission de couple 100, par exemple par soudure.

Le porte-disques de transmission de couple 100 d'axe de rotation X comprend :
- une portion cylindrique 104,
- un flasque 105 s'étendant radialement depuis la portion cylindrique 104,
- une première cavité 101 annulaire disposée sur le côté du flasque et agencée pour recevoir un piston d'actionnement 15 du premier embrayage E1,
- une deuxième cavité 102 annulaire disposée sur le même côté du flasque que la première cavité annulaire et agencée pour recevoir un piston d'actionnement 25 du deuxième embrayage E2,
- une troisième cavité 103 annulaire disposée radialement au-delà des deux autres cavités annulaires et agencée pour recevoir un piston d'actionnement 5 de l'embrayage de coupure de couple K0, et
- des canalisations d'huile 54a, 54b et 54c formées dans le porte-disques de transmission de couple 100 traversant la portion cylindrique 104 et le flasque 105, et débouchant séparément dans les cavités annulaires.

Les cavités 103, 101, 102 annulaires de l'embrayage de coupure de couple K0, du premier embrayage E1 et du deuxième embrayage E2 sont orientées dans une même direction, par exemple en direction de l'arbre menant, c'est-à-dire en direction du moteur thermique du système de groupe motopropulseur. Les cavités annulaires 103, 101, 102 servent de chambre de commande pour les embrayages K0, E1, E2 respectifs.

Le triple embrayage humide 1 comporte autour de son axe de rotation X au moins un élément d'entrée 2 de couple qui est lié en rotation à un arbre menant (non représenté). L'élément d'entrée 2 est situé à l'avant du triple embrayage humide 1.

Dans le premier mode de réalisation, l'élément d'entrée 2 présentant globalement une forme en « L », comporte une partie d'orientation radiale formée par un voile 3 d'entrée de couple et une partie d'orientation axiale formée par un moyeu cannelé 4. L'élément d'entrée 2 de couple est guidé en rotation à l'intérieur d'un boitier 121 fixe par rapport au système de groupe motopropulseur.

L'élément d'entrée 2 d'entrée de couple est par exemple lié en rotation par l'intermédiaire de cannelures formées à la sortie d'un dispositif d'amortissement (tel qu'un double volant amortisseur, etc.) dont l'entrée est liée, par l'intermédiaire notamment d'un volant moteur, à l'arbre menant formé par un vilebrequin qu'entraîne en rotation un moteur thermique équipant le véhicule automobile.

Le voile 3 d'entrée de couple comporte, à son extrémité radiale externe une cannelure agencée pour recevoir l'ensemble multidisques de l'embrayage de coupure de couple K0.

Dans l'exemple considéré, le triple embrayage humide 1 comprend en outre un embrayage de coupure de couple K0 accouplant sélectivement et par friction le voile 3 d'entrée de couple et un porte-disques intermédiaire 91 de l'embrayage de coupure de couple K0 solidaire en rotation avec le porte-disques de transmission de couple 100.

L'embrayage de coupure de couple K0 comprend un ensemble multidisques comprenant plusieurs disques 7 de friction, équipés de garnitures de friction, solidaires en rotation du voile 3 d'entrée de couple, plusieurs flasques 6 respectivement disposés de part et d'autre de chaque disque 7 de friction, solidaires en rotation du porte-disque intermédiaire 81. L'embrayage de coupure de couple K0 est actionné par un piston d'actionnement 5 mobile axialement, ici de l'arrière vers l'avant, entre une position débrayée et une position embrayée qui correspondent respectivement aux états ouvert et fermé de l'embrayage de coupure de couple K0. Le piston d'actionnement 5 pince les garnitures de friction de manière à transmettre un couple entre le voile 3 d'entrée de couple et le porte-disques intermédiaire 91.

Les flasques 6 de l'ensemble multidisques de l'embrayage de coupure de couple K0 sont liés en rotation au porte-disques de transmission de couple 100 par l'intermédiaire d'une cannelure et les disques 7 de friction liés en rotation à l'élément d'entrée 2.

Le triple embrayage humide 1 comprend un couvercle d'entrainement 90 rapporté sur la périphérie extérieure du porte-disques de transmission de couple 100 et agencé pour être entrainé en rotation par la machine électrique tournante. Le couvercle d'entrainement 90 est rapporté sur le pourtour extérieur du flasque 105. Dans le cas présent, le couvercle d'entrainement 90 forme en partie la cavité annulaire 57. Le porte-disques de transmission de couple 100 a pour fonction de transmettre le couple au sein du triple embrayage humide 1. Pour cela, le couvercle d'entrainement 90 est solidaire en rotation avec le porte-disques intermédiaire 91, dans le cas présent par l'intermédiaire d'une liaison soudée.

Le couvercle d'entrainement 90 comprend une zone de connexion 92 apte à être lié en rotation avec une machine électrique tournante. Dans le cas présent, la machine électrique tourne autour d'un axe parallèle à l'axe de rotation X. La machine électrique est dite « off-line » car elle n'est pas concentrique à l'arbre de transmission mais alignée selon un arbre parallèle. La zone de connexion 92 est apte à coopérer directement avec un pignon de la machine électrique tournante.

La zone de connexion 92 peut être réalisée sous la forme d'une couronne apte à être engrenée directement par un pignon ou indirectement (courroie, chaine...) de la machine électrique tournante (non visible). La couronne peut présenter une denture hélicoïdale de forme complémentaire au pignon de la machine électrique tournante.

Le porte-disques de transmission de couple 100 est apte à transmettre le couple en provenance de deux sources distinctes, thermique et électrique. Lorsque l'embrayage de coupure de couple K0 est fermé, le couple issu du moteur thermique peut alors être transmis aux arbres coaxiaux A1, A2 de boite de vitesses en fonction de la fermeture de l'un ou de l'autre du premier embrayage E1 ou du deuxième embrayage E2.

Le premier arbre A1 mené est entraîné en rotation lorsque ledit premier embrayage E1 est fermé et le deuxième arbre A2 mené est entraîné en rotation lorsque ledit deuxième embrayage E2 est fermé.

L'ensemble multidisques du premier embrayage E1 comporte des flasques 11 liés en rotation au support de disques 110 rapporté sur le porte-disques de transmission de couple 100 et des disques 12 de friction liés en rotation à un premier porte-disque de sortie 13. Les disques 12 de friction sont, unitairement, axialement interposés entre deux flasques 11 successifs.

Le premier porte-disque de sortie 13 du premier embrayage E1 est lié en rotation par engrènement avec les disques 12 de friction et par une liaison cannelée avec ledit premier arbre A1 mené. L'extrémité radiale intérieure du premier porte-disque de sortie 13 est solidarisée à un moyeu de sortie cannelé.

L'ensemble multidisques du deuxième embrayage E2 comporte des flasques 21 liés en rotation au support de disques 110 rapporté sur le porte-disques de transmission de couple 100 et des disques 22 de friction liés en rotation à un deuxième porte-disque de sortie 23. Les disques 22 de friction sont, unitairement, axialement interposés entre deux flasques 21 successifs.

Le deuxième porte-disque de sortie 23 du deuxième embrayage E2 est lié en rotation par engrènement avec les disques 22 de friction et par une liaison cannelée avec ledit deuxième arbre A2 mené. L'extrémité radiale intérieure du deuxième porte-disque de sortie 23 est solidarisée à un moyeu de sortie cannelé.

Le support de disques 110 de forme annulaire comporte une cannelure externe 111 qui engrène avec l'ensemble multidisques du premier embrayage E1 et une cannelure interne 112 qui engrène avec l'ensemble multidisques du deuxième embrayage E2. Le support de disques 110 commun au premier embrayage E1 et au deuxième embrayage E2 est assemblé fixement au porte-disques de transmission de couple 100 par l'intermédiaire d'une liaison soudée localisée sur la périphérie interne dudit support de disques.

En variante non représentée, les cannelures interne et externe engrenant avec les ensembles multidisques des embrayages E1 et E2 peuvent être réparties sur deux support de disques distincts et rapportés sur le porte-disques de transmission de couple 100.

D'un point de vue fonctionnement général, le triple embrayage humide 1 est commandé hydrauliquement par l'intermédiaire d'un fluide sous pression, généralement de l'huile.

Pour commander sélectivement le changement d'état de l'embrayage de coupure de couple K0, du premier embrayage E1 et du deuxième embrayage E2, un dispositif de commande du triple embrayage humide gère l'alimentation en huile sous pression au sein de chambres de commande séparées. Le dispositif de commande est généralement intégré au carter de boite de vitesses 120. Le dispositif de commande est raccordé au porte-disques de transmission de couple 100 qui comporte des canalisations d'huile 54a, 54b et 54c sous pression, par exemple au nombre de trois tel que représenté sur la figure 1. Les canalisations d'huile 54a, 54b et 54c sont réparties angulairement autour de la portion cylindrique 104.

Chacune des canalisations d'huile 54a, 54b et 54c sont constituées de perçages sensiblement radiaux et axiaux dirigés en direction des chambres de commande de l'embrayage de coupure de couple K0, des premier et deuxième embrayages E1, E2.

Par exemple, la canalisation d'huile 54c dont l'orifice d'entrée est situé axialement à l'extrémité arrière de la portion cylindrique 104 est associé à la chambre de commande 56 du premier embrayage humide E1. La canalisation d'huile 54c est réalisée par perçage de conduites successives axiales et radiales au sein du porte-disques de transmission de couple 100. Les conduites sont débouchantes les unes dans les autres et agencées pour alimenter en fluide sous pression la chambre de commande 56

Le premier embrayage E1 comporte un piston d'actionnement 15 qui est mobile axialement, ici de l'arrière vers l'avant, entre une position débrayée et une position embrayée qui correspondent respectivement aux états ouvert et fermé du premier embrayage E1. L'ensemble multidisques du premier embrayage E1 est actionné directement par le premier piston d'actionnement 15 réalisée à partir d'une tôle d'acier emboutie. Le piston d'actionnement 15 est mobile axialement par rapport à la première cavité 101 annulaire du porte-disques de transmission de couple 100. Le piston d'actionnement 15 est commandé en déplacement au moyen de la chambre de commande 56 et d'une chambre d'équilibrage 46, ledit piston d'actionnement 15 venant alternativement serrer axialement dans une position embrayée l'ensemble multidisques contre des moyens de réaction 19 disposés sur l'extrémité libre de la cannelure externe 111 du support de disques 110 et libérer axialement dans une position débrayée l'ensemble multidisques. Les moyens de réaction 19 peuvent être par exemple un anneau élastique.

La chambre de commande 56 est délimitée en partie par le piston d'actionnement 15 et le porte-disques de transmission de couple 100, à laquelle est associée une chambre d'équilibrage 46 délimitée en partie par le piston d'actionnement 15 et le support de disques 110.

La canalisation d'huile 54b usinée dans le porte-disques de transmission de couple 100 est associé à la chambre de commande 55 du deuxième embrayage E2. La canalisation d'huile 54b est réalisée par perçage de conduites successives axiales et radiales au sein du porte-disques de transmission de couple 100. Les conduites sont débouchantes les unes dans les autres et agencées pour alimenter en fluide sous pression la chambre de commande 55 du deuxième embrayage E2. La canalisation d'huile 54b débouche dans la deuxième cavité 102 annulaire.

Le deuxième embrayage E2 comporte un piston d'actionnement 25 qui est mobile axialement, ici de l'arrière vers l'avant, entre une position débrayée et une position embrayée qui correspondent respectivement aux états ouvert et fermé du deuxième embrayage E2. Le piston d'actionnement 25 est commandé en déplacement au moyen de la chambre de commande 55 et d'une chambre d'équilibrage 45, ledit piston d'actionnement 25 venant alternativement serrer axialement dans une position embrayée l'ensemble multidisques contre les moyens de réaction 19 disposés sur l'extrémité libre de la cannelure interne 112 du support de disques 110 et libérer axialement dans une position débrayée l'ensemble multidisques.

Dans le premier mode de réalisation, les canalisations d'huile 54a, 54b et 54c débouchent sur le pourtour extérieur du flasque 105 et sont refermées par le couvercle d'entrainement 90.

Comme cela est connu dans le fonctionnement d'un embrayage humide, une chambre d'équilibrage est associée à chaque chambre de commande. Les chambres d'équilibrage sont alimentées en fluide, par exemple du fluide de refroidissement. Le fluide de refroidissement empreinte des canaux de refroidissement 54d distincts des canalisations d'huile 54a, 54b et 54c. Ces canaux de refroidissement 54d distincts sont également formés dans le porte-disques de transmission de couple 100.

Afin de faciliter le pilotage du piston d'actionnement 15, le premier embrayage E1 utilise la chambre d'équilibrage 46 alimentée en fluide de refroidissement. La chambre d'équilibrage 46 est disposée radialement au-delà de la chambre de commande 55 du deuxième embrayage E2. Le canal de refroidissement 54d débouche dans la chambre d'équilibrage 46 annulaire formée en partie par la portion cylindrique 104 du porte-disques de transmission de couple 100 et en partie par le support de disques 110 rapporté sur le flasque 105.

On va maintenant expliquer comment le triple embrayage humide 1 est guidé en rotation par rapport au carter de boite de vitesses 120 dans le but de réduire la bruyance au niveau de l'engrènement du couvercle d'entrainement 90 avec le rotor de la machine électrique tournante (non représenté).

Notamment, le triple embrayage humide 1 est guidé en rotation par rapport au carter de boite de vitesses 120 par l'intermédiaire d'un palier de guidage axial 8 et d'un palier de guidage radial 9 en appui sur le porte-disques de transmission de couple 100. Le porte-disques de transmission de couple 100 comprend notamment une collerette 107 cylindrique à l'intérieur de laquelle est insérée le palier de guidage radial 9, la collerette 107 s'étendant axialement dans la direction opposée à celle des cavités 103, 101, 102 annulaires.

Le palier de guidage axial 8 est disposé radialement en dessous du palier de guidage radial 9. Le palier de guidage axial 8 est en appui sur le porte-disques de transmission de couple 100 dans un logement de réception 106, le logement réception 106 étant orienté axialement dans la direction opposée à celle des cavités 103, 101, 102 annulaires. Les paliers de guidage 8 et 9 sont en appui sur une portion du carter de boite de vitesses 120.

Cette disposition du palier de guidage radial 9 assure une stabilité en rotation du triple embrayage humide 1 au sein du système de groupe motopropulseur. Les mouvements de nutation du triple embrayage humide sont réduits.

Le palier de guidage radial 9 est un palier à aiguilles. Alternativement, le palier de guidage radial peut être un roulement à billes ou un roulement à rouleaux.

Le palier de guidage axial 8 est un palier à aiguilles.

Selon une variante, un roulement à billes à contact oblique peut être utilisé comme palier de guidage axial et radial.

Les paliers de guidage 8,9 sont lubrifiés à partir d'un flux d'alimentation d'huile de lubrification disposé entre les arbres menés A1, A2 de la boite de vitesses 120. Par exemple, l'arbre mené A2 peut comprendre des conduites usinées 119 guidant le flux d'alimentation d'huile de lubrification en direction du porte-disques de transmission de couple 100. Le flux d'huile de lubrification passe entre l'alésage central 108 du porte-disques de transmission de couple 100 et la surface externe du deuxième arbre A2 mené. Un canal de lubrification 80 débouche radialement dans l'alésage central 108 d'axe X du porte-disques de transmission de couple. Afin de créer une réserve d'huile de lubrification au niveau de l'alésage central 108, il est possible d'usiner une zone de réserve 109 présentant un diamètre élargi par rapport à l'alésage central 108 d'axe X. La zone de réserve 109 est de forme annulaire. La zone de réserve 109 est localisée au droit de la sortie du flux d'alimentation d'huile de lubrification en provenance des arbre A1, A2 menés.

Afin de lubrifier le palier de guidage radial 9 de l'embrayage humide avec un débit d'huile adapté, le porte-disques de transmission de couple 100 comprend une portion de sortie 81 d'un canal de lubrification 80 orientée dans la direction opposée à celle des cavités 103, 101 ,102, ladite portion de sortie 81 débouche radialement en dessous du palier de guidage axial 8 et du palier de guidage radial 9. De cette manière, la durée de vie des paliers de guidage est améliorée.

Plus précisément, la portion de sortie 81 débouche dans le logement de réception 106 du palier de guidage axial 8 formé par la collerette 107 cylindrique, le flasque 105 et la portion cylindrique 104 du porte-disques de transmission de couple 100. De cette manière, l'huile de lubrification est orientée directement en direction du palier de guidage axial 8, puis traverse le palier de guidage radial 9.

Afin d'améliorer l'écoulement de l'huile de lubrification, la portion de sortie 81 du canal de lubrification peut être inclinée par rapport à l'axe X d'un angle Δ compris entre 0 et 60 degrés. Dans l'exemple des figures 1 et 2, l'angle Δ est de 45° par rapport à l'axe X. Cette inclinaison facilite également l'usinage du canal de lubrification 80. Le porte-disques de transmission de couple comprend notamment plusieurs portions de sortie 81 de canaux de lubrification 80 réparties autour de l'axe de rotation X, par exemple six portions de sortie 81 réparties angulairement tous les 60 degrés. Les canaux de lubrification 80 sont disposés angulairement entre les canaux d'huile 54b, 54c débouchant dans les premières et deuxième cavités 101, 102 annulaires.

Le débit d'huile de lubrification traversé par le palier de guidage radial 9 dépend du diamètre d'usinage de ladite portion de sortie 81 et du nombre de canaux de lubrification 80.

Afin de garder constant le débit d'alimentation en huile de lubrification, l'entrée du canal de lubrification 80 communiquant directement avec l'alésage central 108 du porte-disques de transmission de couple 100 comprend un lamage 82 usiné dont le diamètre est supérieur au diamètre de la portion de sortie 81. Le lamage 82 usiné débouche radialement dans la zone de réserve 109, l'entrée du canal de lubrification 80 étant décalée axialement par rapport au bord de la zone de réserve 109. Cet embrayage humide selon le premier mode réalisation de l'invention présente l'avantage de réduire le chemin parcouru par l'huile de lubrification avant d'atteindre le palier de guidage radial. Le rendement de la lubrification est amélioré.

Nous allons maintenant présenter d'autres modes de réalisation de la lubrification du palier de guidage radial du triple embrayage humide 1. Tous ces modes de réalisation remplissent la même fonction de lubrifier le palier de guidage radial de l'embrayage humide avec un débit d'huile adapté. La durée de vie du palier de guidage radial est améliorée.

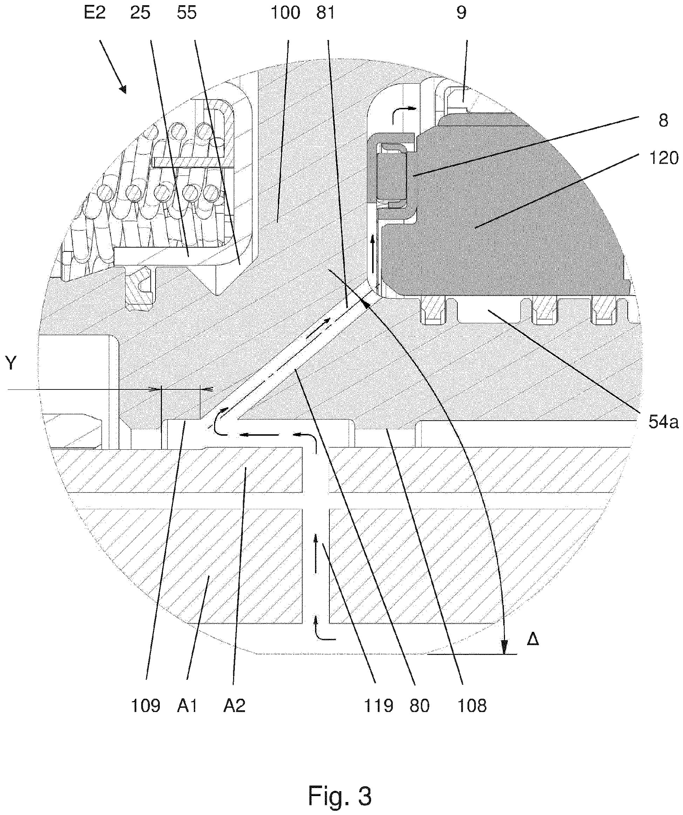

La figure 3 présente un embrayage humide selon un deuxième mode de réalisation de l'invention semblable au premier mode au moins dans son fonctionnement général.

Ce deuxième mode de réalisation diffère de celui exposé en référence aux figures 1 et 2 en ce que l'entrée du canal de lubrification 80 communiquant directement avec l'alésage central 108 est du même diamètre que la portion de sortie 81. Cette simplification de forme facilite l'usinage du canal de lubrification 80.

Afin d'améliorer l'écoulement de l'huile de lubrification, la portion de sortie 81 du canal de lubrification est inclinée par rapport à l'axe X d'un angle Δ de 45° par rapport à l'axe X. Cette inclinaison facilite également l'usinage du canal de lubrification 80.

Afin d'avoir un flux homogène d'huile de lubrification, l'entrée du canal de lubrification 80 est décalée axialement par rapport au bord de la zone de réserve 109 d'une valeur Y comprise entre 1 et 10 mm, par exemple 5 mm. En fonction de la valeur du décalage Y, la valeur du débit en sortie de portion de sortie est augmentée. Par exemple, une valeur de décalage Y égale à 0 mm donne un mauvais débit en sortie.

Ce deuxième mode de réalisation présente l'avantage de réduire le chemin parcouru par l'huile de lubrification avant d'atteindre le palier de guidage radial. Le rendement de la lubrification est amélioré.

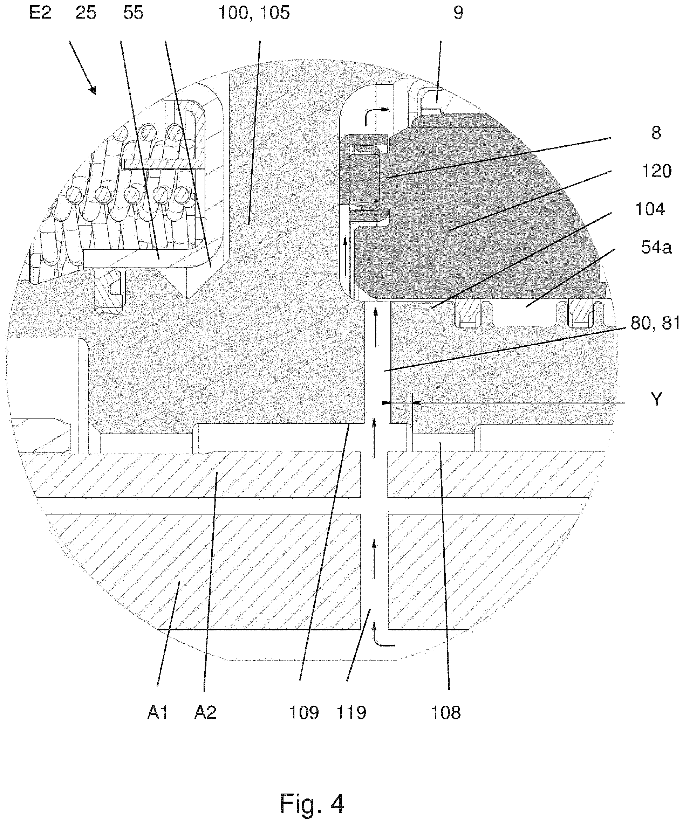

La figure 4 présente un embrayage humide selon un troisième mode de réalisation de l'invention semblable au premier mode au moins dans son fonctionnement général.

Ce troisième mode de réalisation diffère de celui exposé en référence aux figures 1 et 2 en ce que la portion de sortie 81 du canal de lubrification 80 est orientée selon un axe perpendiculaire à l'axe X et traverse de part en part la portion cylindrique 104 du porte-disques de transmission de couple 100.

Dans cet exemple, les paliers de guidage 8,9 sont lubrifiés à partir d'un flux d'alimentation d'huile de lubrification disposé entre les arbres menés A1, A2 de la boite de vitesses 120. Le flux d'huile de lubrification est orienté perpendiculairement à l'axe de rotation de l'arbre mené A2 en direction du porte-disques de transmission de couple 100. Le flux d'huile de lubrification passe entre l'alésage central 108 du porte-disques de transmission de couple 100 et la surface externe du deuxième arbre A2 mené puis emprunte directement le canal de lubrification 80. Afin de créer une réserve d'huile de lubrification au niveau de l'alésage central 108, il est possible d'usiner une zone de réserve 109 présentant un diamètre élargi par rapport à l'alésage central 108 d'axe X. La zone de réserve 109 est de forme annulaire. La zone de réserve 109 est localisée au droit de la sortie du flux d'alimentation d'huile de lubrification en provenance des arbre A1, A2 menés.

Afin de lubrifier le palier de guidage radial 9 de l'embrayage humide avec un débit d'huile adapté, le canal de lubrification 80 est orientée selon un axe perpendiculaire à l'axe X et traverse de part en part la portion cylindrique 104 du porte-disques de transmission de couple 100. La portion de sortie 81 débouche radialement en dessous du palier de guidage axial 8 et du palier de guidage radial 9. De cette manière, la durée de vie des paliers de guidage est améliorée.

Plus précisément, la portion de sortie 81 débouche dans le logement de réception 106 du palier de guidage axial 8 formé par la collerette 107 cylindrique, le flasque 105 et la portion cylindrique 104 du porte-disques de transmission de couple 100. De cette manière, l'huile de lubrification est orientée directement en direction du palier de guidage axial 8, puis traverse le palier de guidage radial 9.

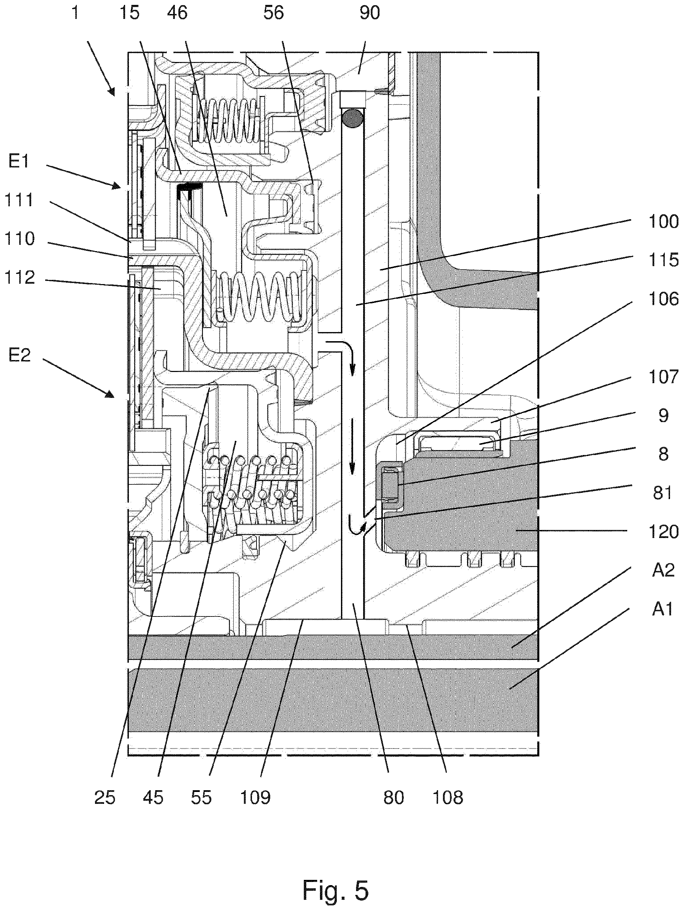

La figure 5 présente un embrayage humide selon un quatrième mode de réalisation de l'invention semblable au premier mode au moins dans son fonctionnement général.

Ce quatrième mode de réalisation diffère de celui exposé en référence aux figures 1 et 2 en ce que le canal de lubrification 80 communique avec la chambre d'équilibrage 46 du premier embrayage E1.

Dans ce quatrième mode de réalisation, la chambre d'équilibrage 46 est alimentée en fluide, par exemple du fluide de refroidissement. Le fluide de refroidissement empreinte un canal de refroidissement (non représenté) distinct des canalisations d'huile 54a, 54b et 54c. Une partie du fluide présent dans la chambre d'équilibrage est transféré en direction du canal de lubrification 80 par l'intermédiaire de perçages 115 additionnels réalisés dans le porte-disques de transmission de couple 100. Ainsi, le fluide de refroidissement issu du canal de refroidissement 54d est commun avec l'huile de lubrification passant au travers du canal de lubrification 80 et du palier de guidage radial 9.

Comme illustré sur la figure 5, le canal de lubrification 80 communique avec la chambre d'équilibrage 46 et l'alésage central 108 d'axe X du porte-disques de transmission de couple 100 au moyen d'un perçage 115 additionnel s'étendant radialement au travers du flasque 105. Ce perçage 115 additionnel est bouché par le couvercle d'entrainement 90. Ainsi, une grande partie du flux d'alimentation d'huile de lubrification retourne dans l'alésage central 108 et une petite partie du flux d'alimentation d'huile de lubrification emprunte le canal de lubrification 80. Par exemple, le débit d'huile de lubrification débouchant radialement en dessous du palier de guidage radial est compris entre 0,01 et 0,1 litre par minute.

En variante, le canal de lubrification 80 peut communiquer avec la chambre d'équilibrage 47 de l'embrayage de coupure de couple K0 ou encore communiquer avec la chambre d'équilibrage 45 du deuxième embrayage E2.

En variante non représentée, le perçage 115 additionnel peut être non débouchant dans l'alésage central 108 du porte-disques de transmission de couple 100.

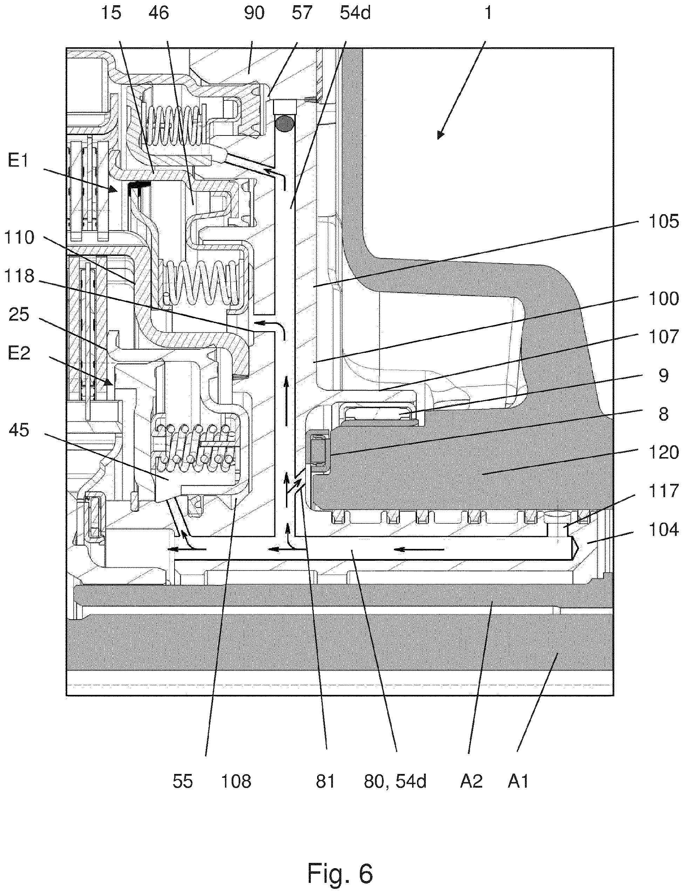

La figure 6 présente un embrayage humide selon un cinquième mode de réalisation de l'invention semblable au premier mode au moins dans son fonctionnement général.

Ce cinquième mode de réalisation diffère de celui exposé en référence aux figures 1 et 2 en ce que le canal de lubrification 80 communique avec la chambre d'équilibrage 46 du premier embrayage E1 au moyen du canal de refroidissement 54d

Dans ce cinquième mode de réalisation, la chambre d'équilibrage 46 est alimentée en fluide, par exemple du fluide de refroidissement. Le fluide de refroidissement empreinte un canal de refroidissement 54d distinct des canalisations d'huile 54a, 54b et 54c. Le canal de refroidissement 54d débouche dans la chambre d'équilibrage 46 annulaire formée en partie par la portion cylindrique 104 du porte-disques de transmission de couple 100 et en partie par le support de disques 110 rapporté sur le flasque 105. Le fluide de refroidissement issu du canal de refroidissement 54d est commun avec l'huile de lubrification passant au travers du canal de lubrification 80 et du palier de guidage radial 9.

Comme illustré sur la figure 6, le canal de lubrification 80 est commun avec le canal de refroidissement 54d alimentant en huile les chambres d'équilibrage 47, 46, 45 des différents embrayages K0, E1, E2 et comprend une bifurcation formant la portion de sortie 81.

Le canal de refroidissement 54d comprend un orifice d'entrée d'huile 117 dont l'implantation est disposée radialement à l'intérieur de la portion de sortie 81 et un orifice de sortie d'huile 118 débouchant dans la chambre d'équilibrage 46, le canal de refroidissement 54d traversant de part en part le porte-disques de transmission de couple 100. La portion de sortie 81 est disposée axialement entre l'orifice d'entrée d'huile 117 et l'orifice de sortie d'huile 118 du canal de refroidissement 54d.

Cet embrayage humide selon le cinquième mode de réalisation de l'invention présente l'avantage de fournir un débit conséquent d'huile de lubrification en direction du palier de guidage radial. Par exemple, le débit d'huile de lubrification débouchant radialement en dessous du palier de guidage radial est compris entre 0,1 et 1 litre par minute. L'ajustement du débit en sortie dépend du diamètre d'usinage de ladite portion de sortie 81.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre défini par les revendications de l'invention.

On comprend à la lecture de ce qui précède que la présente invention propose un triple embrayage humide dans lequel les embrayages sont concentriques et disposées radialement dans un même plan. L'encombrement axial d'un tel triple embrayage humide au sein d'une chaine de transmission de couple est réduit.

L'invention ne saurait toutefois se limiter aux moyens et configurations décrits et illustrés ici, et elle s'étend également à tout moyen ou configuration équivalents et à toute combinaison technique opérant de tels moyens, toujours dans le cadre défini par les revendications. En particulier, la forme du canal de lubrification peut être modifiée sans nuire à l'invention, dans la mesure où ces composants, in fine, remplissent les mêmes fonctionnalités que celles décrites et définies dans les revendications.

## Revendications

1. Embrayage humide (K0, E1, E2) pour système de groupe motopropulseur comportant autour d'un axe (X) au moins :
- un ensemble multidisques (K0, E1, E2) composé de flasques (6, 11, 21) et de disques (7, 12, 22) de friction ;
- un porte-disques de transmission de couple (100) supportant l'ensemble multidisques de l'embrayage humide, comportant :
• une portion cylindrique (104),
• un flasque (105) s'étendant radialement depuis la portion cylindrique (104),
• une cavité (103, 101, 102) annulaire d'axe (X) disposée sur un côté du flasque (105) et agencée pour recevoir un piston d'actionnement (5, 15, 25) de l'ensemble multidisques (K0, E1, E2),
- un palier de guidage radial (9) rapporté sur le porte-disques de transmission de couple (100) de l'autre côté du flasque et agencé pour guider en rotation l'embrayage humide par rapport au système de groupe motopropulseur,
tel que le porte-disques de transmission de couple (100) comprend au moins une portion de sortie (81) d'un canal de lubrification (80) du palier de guidage radial qui débouche radialement en dessous du palier de guidage radial (9),
**caractérisé en ce que** la portion de sortie (81) du canal de lubrification (80) est orientée dans la direction opposée à celle de la cavité (103, 101, 102) annulaire et inclinée par rapport à l'axe (X) d'un angle (Δ) compris entre 0 et 60 degrés.

2. Embrayage humide (K0, E1, E2) selon la revendication précédente, dans lequel le canal de lubrification (80) débouche radialement dans un alésage central (108) d'axe (X) du porte-disques de transmission de couple (100).

3. Embrayage humide (K0, E1, E2) selon la revendication 2, dans lequel l'entrée du canal de lubrification (80) communiquant directement avec l'alésage central (108) du porte-disques de transmission de couple (100) comprend un lamage (82) usiné dont le diamètre est supérieur au diamètre de la portion de sortie (81).

4. Embrayage humide (K0, E1, E2) selon l'une des revendications 1 à 3, dans lequel le canal de lubrification (80) débouche radialement dans une zone de réserve (109) présentant un diamètre élargi par rapport à l'alésage central (108) d'axe (X) du porte-disques de transmission de couple (100), l'entrée du canal de lubrification étant décalée axialement par rapport aux bords de la zone de réserve (109) d'une valeur (Y) comprise entre 1 et 10 mm.

5. Embrayage humide (K0, E1, E2) selon la revendication 1, comprenant un piston d'actionnement (5, 15, 25) de l'ensemble multidisques, mobile axialement par rapport au porte-disques de transmission de couple (100) entre une position embrayée et une position débrayée de l'embrayage humide, le piston d'actionnement étant commandé en déplacement au moyen d'une chambre de commande (57, 56, 55), délimitée en partie par le piston d'actionnement (5, 15, 25) et la cavité (103, 101, 102) annulaire, à laquelle est associée une chambre d'équilibrage (47, 46, 45) délimitée en partie par le piston d'actionnement (5, 15, 25), ledit canal de lubrification (80) communiquant avec la chambre d'équilibrage.

6. Embrayage humide (K0, E1, E2) selon la revendication 5, dans lequel le canal de lubrification (80) communique avec un alésage central (108) d'axe (X) du porte-disques de transmission de couple (100).

7. Embrayage humide (K0, E1, E2) selon la revendication 5, dans lequel le canal de lubrification (80) est commun avec un canal de refroidissement (54d) alimentant en huile la chambre d'équilibrage (47, 46, 45) et comprend une bifurcation formant la portion de sortie (81).

8. Embrayage humide (K0, E1, E2) selon la revendication précédente, dans lequel le canal de refroidissement (54d) comprend un orifice d'entrée d'huile (117) dont l'implantation est disposée radialement à l'intérieur de la portion de sortie (81) et un orifice de sortie d'huile (118) débouchant dans la chambre d'équilibrage (47, 46, 45), le canal de refroidissement (54d) traversant de part en part le porte-disques de transmission de couple (100).

9. Embrayage humide (K0, E1, E2) selon la revendication précédente, dans lequel la portion de sortie (81) est disposée axialement entre l'orifice d'entrée d'huile (117) et l'orifice de sortie d'huile (118) du canal de refroidissement (54d).

10. Embrayage humide (K0, E1, E2) selon l'une des revendications précédentes, dans lequel le porte-disques de transmission de couple (100) comprend une collerette (107) cylindrique à l'intérieur de laquelle est insérée le palier de guidage radial (9), la collerette (107) cylindrique s'étendant axialement dans la direction opposée à celle de la cavité (103, 101, 102) annulaire.

11. Embrayage humide (K0, E1, E2) selon la revendication précédente, dans lequel un couvercle d'entrainement (90) est rapporté sur la périphérie extérieure du flasque (105) du porte-disques de transmission de couple (100) et comprend une couronne dentée apte à être liée en rotation avec une machine électrique tournante autour d'un axe parallèle à l'axe de rotation (X), la collerette (107) cylindrique supportant le palier de guidage radial (9) est disposée géométriquement au droit du couvercle d'entrainement (90).

12. Double embrayage humide (E1, E2) pour système de groupe motopropulseur comportant autour d'un axe (X) au moins :
- un premier embrayage humide (E1) selon l'une des revendications précédentes, de type multidisques, commandé pour accoupler sélectivement un arbre menant à un premier arbre mené ;
- un deuxième embrayage humide (E2), de type multidisques, commandés pour accoupler sélectivement un arbre menant à un deuxième arbre mené ;
les premier et deuxième embrayages (E1, E2) étant disposés radialement l'un au-dessus de l'autre.

13. Triple embrayage humide (1) pour système de groupe motopropulseur comprenant un embrayage de coupure de couple (K0) de type multidisques, commandé pour accoupler sélectivement un arbre menant à une machine électrique tournante, et un double embrayage humide (E1, E2) selon la revendication précédente, l'embrayage de coupure de couple (K0) étant disposé radialement au-dessus du double embrayage humide (E1, E2).

## Patentansprüche

1. Nasskupplung (K0, E1, E2) für ein Antriebsstrangsystem, umfassend um eine Achse (X) herum mindestens:
- eine Mehrlamellenanordnung (K0, E1, E2), die aus Flanschen (6, 11, 21) und aus Reiblamellen (7, 12, 22) zusammengesetzt ist;
- einen Lamellenträger zur Drehmomentübertragung (100), der die Mehrlamellenanordnung der Nasskupplung trägt, umfassend:
• einen zylindrischen Abschnitt (104),
• einen Flansch (105), der sich radial von dem zylindrischen Abschnitt (104) aus erstreckt,
• einen ringförmigen Hohlraum (103, 101, 102) mit der Achse (X), der auf einer Seite des Flansches (105) angeordnet ist und dazu gestaltet ist, einen Betätigungskolben (5, 15, 25) der Mehrlamellenanordnung (K0, E1, E2) aufzunehmen,
- ein Radialführungslager (9), das an den Lamellenträger zur Drehmomentübertragung (100) auf der anderen Seite des Flansches angesetzt ist und dazu gestaltet ist, die Nasskupplung in Bezug auf das Antriebsstrangsystem drehend zu führen,
so dass der Lamellenträger zur Drehmomentübertragung (100) mindestens einen Auslassabschnitt (81) eines Schmierkanals (80) des Radialführungslagers umfasst, der radial unter dem Radialführungslager (9) mündet, **dadurch gekennzeichnet, dass** der Auslassabschnitt (81) des Schmierkanals (80) in die Richtung ausgerichtet ist, die zu der des ringförmigen Hohlraums (103, 101, 102) entgegengesetzt ist, und in Bezug auf die Achse (X) um einen Winkel (Δ) zwischen 0 und 60 Grad geneigt ist.

2. Nasskupplung (K0, E1, E2) nach dem vorhergehenden Anspruch, wobei der Schmierkanal (80) radial in eine zentrale Bohrung (108) mit der Achse (X) des Lamellenträgers zur Drehmomentübertragung (100) mündet.

3. Nasskupplung (K0, E1, E2) nach Anspruch 2, wobei der Einlass des Schmierkanals (80), der direkt mit der zentralen Bohrung (108) des Lamellenträgers zur Drehmomentübertragung (100) in Verbindung steht, eine bearbeitete Senkung (82) umfasst, deren Durchmesser größer als der Durchmesser des Auslassabschnitts (81) ist.

4. Nasskupplung (K0, E1, E2) nach einem der Ansprüche 1 bis 3, wobei der Schmierkanal (80) radial in einen Vorratsbereich (109) mündet, der einen in Bezug auf die zentrale Bohrung (108) mit der Achse (X) des Lamellenträgers zur Drehmomentübertragung (100) aufgeweiteten Durchmesser aufweist, wobei der Einlass des Schmierkanals in Bezug auf die Ränder des Vorratsbereichs (109) um einen Wert (Y) zwischen 1 und 10 mm axial versetzt ist.

5. Nasskupplung (K0, E1, E2) nach Anspruch 1, umfassend einen Betätigungskolben (5, 15, 25) der Mehrlamellenanordnung, der in Bezug auf den Lamellenträger zur Drehmomentübertragung (100) zwischen einer eingerückten Stellung und einer ausgerückten Stellung der Nasskupplung axial beweglich ist, wobei der Betätigungskolben mittels einer Steuerkammer (57, 56, 55) verlagernd gesteuert wird, die zum Teil durch den Betätigungskolben (5, 15, 25) und den ringförmigen Hohlraum (103, 101, 102) begrenzt wird und der eine Ausgleichskammer (47, 46, 45) zugeordnet ist, die zum Teil durch den Betätigungskolben (5, 15, 25) begrenzt wird, wobei der Schmierkanal (80) mit der Ausgleichskammer in Verbindung steht.

6. Nasskupplung (K0, E1, E2) nach Anspruch 5, wobei der Schmierkanal (80) mit einer zentralen Bohrung (108) mit der Achse (X) des Lamellenträgers zur Drehmomentübertragung (100) in Verbindung steht.

7. Nasskupplung (K0, E1, E2) nach Anspruch 5, wobei der Schmierkanal (80) mit einem Kühlkanal (54d) gemeinsam ist, der die Ausgleichskammer (47, 46, 45) mit Öl versorgt, und eine Gabelung umfasst, die den Auslassabschnitt (81) bildet.

8. Nasskupplung (K0, E1, E2) nach dem vorhergehenden Anspruch, wobei der Kühlkanal (54d) eine Öleinlassöffnung (117) umfasst, deren Lage radial innerhalb des Auslassabschnitts (81) angeordnet ist, und eine Ölauslassöffnung (118), die in die Ausgleichskammer (47, 46, 45) mündet, wobei der Kühlkanal (54d) den Lamellenträger zur Drehmomentübertragung (100) von einer Seite zur anderen durchquert.

9. Nasskupplung (K0, E1, E2) nach dem vorhergehenden Anspruch, wobei der Auslassabschnitt (81) axial zwischen der Öleinlassöffnung (117) und der Ölauslassöffnung (118) des Kühlkanals (54d) angeordnet ist.

10. Nasskupplung (K0, E1, E2) nach einem der vorhergehenden Ansprüche, wobei der Lamellenträger zur Drehmomentübertragung (100) einen zylindrischen Bund (107) umfasst, in den das Radialführungslager (9) eingesetzt ist, wobei sich der zylindrische Bund (107) axial in die Richtung erstreckt, die zu der des ringförmigen Hohlraums (103, 101,102) entgegengesetzt ist.

11. Nasskupplung (K0, E1, E2) nach dem vorhergehenden Anspruch, wobei ein Antriebsdeckel (90) an den Außenumfang des Flansches (105) des Lamellenträgers zur Drehmomentübertragung (100) angesetzt ist und einen Zahnkranz umfasst, der geeignet ist, mit einer um eine Achse, die parallel zu der Rotationsachse (X) verläuft, umlaufenden elektrischen Maschine drehverbunden zu sein, wobei der zylindrische Bund (107), der das Radialführungslager (9) trägt, geometrisch rechts von dem Antriebsdeckel (90) angeordnet ist.

12. Doppelnasskupplung (E1, E2) für ein Antriebsstrangsystem, umfassend um eine Achse (X) herum mindestens:
- eine erste Nasskupplung (E1) nach einem der vorhergehenden Ansprüche, vom Mehrlamellentyp, die gesteuert wird, um selektiv eine Antriebswelle mit einer ersten angetriebenen Welle zu koppeln;
- eine zweite Nasskupplung (E2), vom Mehrlamellentyp, die gesteuert wird, um selektiv eine Antriebswelle mit einer zweiten angetriebenen Welle zu koppeln;
wobei die ersten und zweiten Kupplungen (E1, E2) radial übereinander angeordnet sind.

13. Dreifachnasskupplung (1) für ein Antriebsstrangsystem, umfassend eine Drehmomenttrennkupplung (K0) von Mehrlamellentyp, die gesteuert wird, um selektiv eine Antriebswelle mit einer umlaufenden elektrischen Maschine zu koppeln, und eine Doppelnasskupplung (E1, E2) nach dem vorhergehenden Anspruch, wobei die Drehmomenttrennkupplung (K0) radial über der Doppelnasskupplung (E1, E2) angeordnet ist.

## Claims

1. Wet clutch (K0, E1, E2) for a powertrain system comprising, about an axis (X), at least:
- a multi-disc assembly (K0, E1, E2) composed of flanges (6, 11, 21) and friction discs (7, 12, 22);
- a torque-transmitting disc carrier (100) supporting the multi-disc assembly of the wet clutch, comprising:
• a cylindrical portion (104),
• a flange (105) extending radially from the cylindrical portion (104),
• an annular cavity (103, 101, 102) of axis (X) positioned on one side of the flange (105) and designed to receive an actuating piston (5, 15, 25) for actuation of the multi-disc assembly (K0, E1, E2),
- a radial guide bearing (9) attached to the torque-transmitting disc carrier (100) on the other side of the flange and arranged to guide the wet clutch in rotation relative to the powertrain system,
wherein the torque-transmitting disc carrier (100) comprises at least one outlet portion (81) of a lubrication channel (80) for lubricating the radial guide bearing which opens out radially below the radial guide bearing (9),
**characterized in that** the outlet portion (81) of the lubrication channel (80) is oriented in the opposite direction to the direction of the annular cavity (103, 101, 102) and inclined relative to the axis (X) by an angle (Δ) of between 0 and 60 degrees.

2. Wet clutch (K0, E1, E2) according to the preceding Claim, wherein the lubrication channel (80) opens out radially in a central bore (108) of axis (X) of the torque-transmitting disc carrier (100).

3. Wet clutch (K0, E1, E2) according to Claim 2, wherein the inlet of the lubrication channel (80) communicating directly with the central bore (108) of the torque-transmitting disc carrier (100) comprises a machined counterbore (82) the diameter of which is greater than the diameter of the outlet portion (81).

4. Wet clutch (K0, E1, E2) according to Claims 1 to 3, wherein the lubrication channel (80) opens out radially in a reserve area (109) having a diameter that is enlarged with respect to the central bore (108) of axis (X) of the torque-transmitting disc carrier (100), the inlet of the lubrication channel being offset axially relative to the edges of the reserve area (109) by a value (Y) of between 1 and 10 mm.

5. Wet clutch (K0, E1, E2) according to Claim 1, comprising an actuating piston (5, 15, 25) for actuation of the multi-disc assembly, which is axially movable relative to the torque-transmitting disc carrier (100) between an engaged position and a disengaged position of the wet clutch, the actuating piston being controlled in movement by means of a control chamber (57, 56, 55), partially delimited by the actuating piston (5, 15, 25) and the annular cavity (103, 101, 102), with which a balancing chamber (47, 46, 45) partially delimited by the actuating piston (5, 15, 25) is associated, said lubrication channel (80) communicating with the balancing chamber.

6. Wet clutch (K0, E1, E2) according to Claim 5, wherein the lubrication channel (80) communicates with a central bore (108) of axis (X) of the torque-transmitting disc carrier (100).

7. Wet clutch (K0, E1, E2) according to Claim 5, wherein the lubrication channel (80) is common to a cooling channel (54d) supplying the balancing chamber (47, 46, 45) with oil and comprises a fork forming the outlet portion (81).

8. Wet clutch (K0, E1, E2) according to the preceding claim, wherein the cooling channel (54d) comprises an oil inlet port (117) located radially internally to the outlet portion (81) and an oil outlet port (118) opening out in the balancing chamber (47, 46, 45), the cooling channel (54d) passing right through the torque-transmitting disc carrier (100).

9. Wet clutch (K0, E1, E2) according to the preceding claim, wherein the outlet portion (81) is arranged axially between the oil inlet port (117) and the oil outlet port (118) of the cooling channel (54d).

10. Wet clutch (K0, E1, E2) according to one of the preceding claims, wherein the torque-transmitting disc carrier (100) comprises a cylindrical collar (107) inside which the radial guide bearing (9) is inserted, the cylindrical collar (107) extending axially in the opposite direction to the direction of the annular cavity (103, 101, 102).

11. Wet clutch (K0, E1, E2) according to the preceding claim, wherein a drive cover (90) is attached to the outer periphery of the flange (105) of the torque-transmitting disc carrier (100) and comprises a ring gear able to be rotatably connected to a rotary electric machine rotating about an axis parallel to the axis of rotation (X), the cylindrical collar (107) supporting the radial guide bearing (9) is arranged geometrically in line with the drive cover (90).

12. Dual wet clutch (E1, E2) for a powertrain system comprising, about an axis (X), at least:
- a first wet clutch (E1) according to one of the preceding claims, of multi-disc type, operated in such a way as to selectively couple a drive shaft to a first driven shaft;
- a second wet clutch (E2), of multi-disc type, operated in such a way as to selectively couple a drive shaft to a second driven shaft;
the first and second clutches (E1, E2) being positioned radially one above the other.

13. Triple wet clutch (1) for a powertrain system, comprising a torque disconnect clutch (K0) of multi-disc type, operated in such a way as to selectively couple a drive shaft to a rotary electric machine, and a dual wet clutch (E1, E2) according to the preceding claim, the torque disconnect clutch (K0) being positioned radially above the dual wet clutch (E1, E2).
